Europäisches Patentamt

European Patent Office

Office européen des brevets

(11) Numéro de publication: **0 336 482**
**A2**

(12)

# DEMANDE DE BREVET EUROPEEN

(21) Numéro de dépôt: 89200764.2

(22) Date de dépôt: 24.03.89

(51) Int. Cl.⁴: **F16B 29/00** , **F16B 19/08** ,
**B25B 13/00**

(30) Priorité: 08.04.88 IT 6731088

(43) Date de publication de la demande:
11.10.89 Bulletin 89/41

(84) Etats contractants désignés:
**DE ES FR SE**

(71) Demandeur: **MADIGE DI DIEGO GEMESIO & C.**
**S.A.S.**
**Via Cavour 116**
**I-12068 Narzole (Cuneo)(IT)**

(72) Inventeur: **Gemesio, Diego**
**Via Fossano 9**
**I-12040 Salmour (Cuneo)(IT)**

(74) Mandataire: **Robba, Eugenio et al**
**Studio "INTERPATENT" via Caboto 35**
**I-10129 Turin(IT)**

(54) Rivet et outil relatif pour la fixation dudit rivet lors d'un assemblage mécanique.

(57) Pour assembler des éléments plats entre eux, il est usuel d'employer des rivets d'assemblage intérieurement taraudés, bombés sur place lorsque le montage est terminé.

Dans le but de faire exécuter aisément cette opération à des usagers dépourvus de particuliers outils, on a prévu un rivet (1) intérieurement taraudé avec une tête (5) façonnée ou pourvue d'au moins un (préférablement deux) creux (7) bon pour s'accoupler avec une appropriée saillie (17) (ou saillies) prévue/es sur la tête (13) d'une clef appropriée (9), à poignée repliée, pour en faciliter la prise de la main.

Lors de l'assemblage, l'usager, maintenant immobile la tête (5) du rivet (1) à fixer, introduit dans ledit rivet (1) un boulon taraudé (15), ensuite il visse le boulon à fond. Cette action de vissage "soulève" la partie tige (3) du rivet (1) en produisant l'effet de bombage que l'on désirait obtenir.

FIG. 1

## RIVET ET OUTIL RELATIF POUR LA FIXATION DUDIT RIVET LORS D'UN ASSEMBLAGE MECANIQUE

La présente invention se rapporte à un rivet et outil relatif pour la fixation dudit rivet lors d'un assemblage mécanique spécialement indiqué pour l'assemblage de tôles et articles similaires.

Il est connu que pour l'assemblage de tôles ou articles similaires l'on utilise souvent des rivets à emboutir ou bloquer sur place après qu'ils ont été montés; ledit blocage étant réalisé généralement par emboutissage ou rabat des dits rivets au moyen d'un outil approprié.

Pas toujours pourtant, spécialement lorsque l'assemblage doit être réalisé par l'usager, ce dernier est pourvu dudit outil, normalement utilisé chez les carrossiers ou les mécaniciens; pour cette raison l'usager qui désire faire lui-même est embarassé et dépourvu du moyen approprié pour réaliser ledit assemblage.

Le but de la présente invention est celui de obvier au dit inconvénient en fournissant un rivet et un outil simples et efficaces lesquels permettent aux dits usagers de réaliser ledit assemblage sans difficultés particulières.

L'invention en objet est essentiellement constituée par un rivet traditionnel pour assemblage mécanique du type ayant une tige taraudée intérieurement, et pourvu d'une tête plane perpendiculaire à la dite tige, caractérisé par le fait que la dite tête plane est pourvue d'au moins un creux (préférablement deux) ou similaires mécaniquement, propres à permettre à un outil approprié, du type clef façonnée, de s'insérer dans lesdites cavités et bloquer sur place le rivet, maintenant immobile, par la main, ledit outil, ou clef; l'introduction d'un boulon dans la tige taraudée et le vissage suivant forcé dudit boulon, le rivet étant immobile, en déformant la tige dudit rivet et en produisant l'effet désiré de bombage, bon pour bloquer ledit rivet sur place.

L'outil par lequel le rivet est maintenu immobile est essentiellement un levier, du type clef de serrage, convénablement replié pour faciliter sa prise à la main par l'usager, la partie façonnée apte à être insérée dans les creux de la tête du rivet étant la partie operationnelle maintenue sur ledit rivet par l'usager qui empoigne la clef du côté de la poignée et la maintient sur place jusqu' au moment où il a terminé de visser dans le rivet le boulon ou vis bonne pour "soulever" la partie déformable (ou tige) du dit rivet.

L'invention sera maintenant décrite en détail en faisant particulière référence aux dessins annexés, donnés à titre d'exemple pas limitatif et illustrant un mode d'exécution de l'invention dans lesquels:

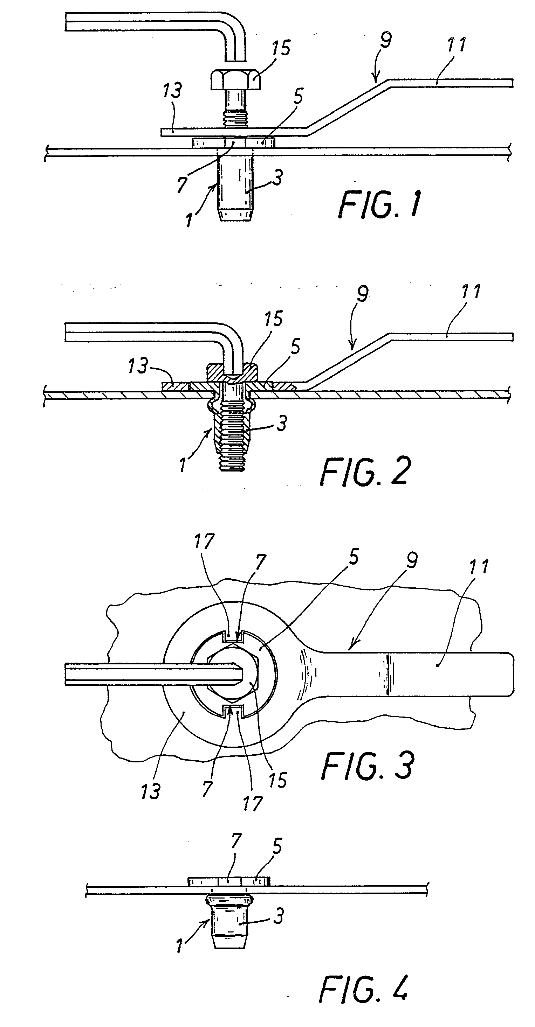

- la figure 1 est une vue partiellement éclatée du rivet, et du relatif moyen de blocage, au début du montage;
- la figure 2 est une section radiale du rivet et des outils rélatifs lors de l'exécution;
- la figure 3 est une vue en plan du rivet et de l'outil relatif;
- la figure 4 est une vue latérale du rivet à la fin de l'opération d'application.

Comme il est évident des dites figures, l'invention en objet consiste essentiellement d'un rivet 1, du type pour assemblage, pourvu d'une tige 3 taraudée inté rieurement, au moins partiellement dans sa partie inférieure et d'une tête 5 perpendiculaire à ladite tige 3.

Dans les rivets connus et utilisés jusqu'à présent pour ce genre d'assemblage, ladite tête est prévue de forme généralement circulaire.

Dans le rivet selon l'invention au contraire, cette tête 5 est prévue pourvue de deux creux 7, diamétralement opposés l'un à l'autre et ayant une forme préfixée.

Un outil à clef 9, convénablement replié dans la poignée 11, a une partie 13 bonne pour s'introduire dans les cavités ou creux 7 de la tête 5 du rivet 1 et peut maintenir immobile cette dernière sur place pendant que l'usager introduit un boulon 15 dans la tige taraudée 3 du rivet 1 et visse le boulon sur place en maintenant immobile la tête 5 du rivet 1.

Il est clair que cette action, si effectuée correctement, réalise un bombage de la partie tige 3 du rivet 1 en provoquant ainsi l'effet de blocage sur place désiré.

Il est clair que les creux 7 et les rélatives saillies 17 de la clef 9 sont un mode de réalisation d'engagement réciproque entre la tête opérationnelle 13 de la clef 9 et la tête 5 du rivet 1, en étant évident que n'importe quel autre mode de réalisation d'éléments bons pour s'accoupler entre eux dans le but de rendre stable un accouplement entre la tête 13 de la clef 9 et la tête 5 du rivet 1 sont des équivalents mécaniques à tous les effets.

L'emploi de l'outil est extrèmement simple; l'usager applique la partie clef 13 de l'outil 9 sur la tête 5 du rivet à bloquer; en maintenant immobile ladite tête 5 par la clef 13 il introduit dans le trou 3 du rivet 1 un boulon 15 et visse ce dernier sur place toujours en maintenant immobile la tête 5 du rivet 1.

En poursuivant dans cette action avec un certain effort, la partie taraudée du boulon 15 agira axialement sur la partie taraudée du rivet 1 et la " soulevera " ,en causant l'effet de bombage que l'usager désire obtenir pour le blocage de l'assemblage.

Il est évident que l'invention n'est pas limitée au mode d'éxecution décrit et illustré mais que beaucoup de variantes et ultérieurs perfectionnements pourront y être apportés sans pour cela sortir du cadre de l'invention.

## Revendications

1. Rivet et relatif outil pour le fixage du dit rivet lors d'un assemblage mécanique , dans lequel ledit rivet est un normal rivet pour assemblage mécanique,du type avec tige taraudée intérieurement et pourvu de tête perpendiculaire à ladite tige,caractérisé par le fait que ladite tête plane est pourvue d'au moins un creux (préférablement deux) ou équivalents mécaniques similaires,bons pour permettre à un outil approprié,du type clef façonnée ,de s'introduire dans ledit/s creux et bloquer sur place le rivet,en maintenant immobile , par la main, ledit outil, ou clef , l'introduction d'un boulon à l'intérieur da la tige taraudée et le vissement forcé successif du dit boulon, avec le rivet bloqué, en déformant la tige du dit rivet et en produisant l'effet de bombage, bon pour bloquer ledit rivet sur place.

2. Rivet et outil relatif pour le blocage du même lors d'un assemblage mécanique selon la revendication 1, caractérisé par le fait que l'outil par lequel le rivet est maintenu bloqué est essentiellement un levier, du type clef de serrage, convenablement replié pour faciliter son blocage par l'usager à la main, la partie façonnée appropriée pour s'introduire dans les creux de la tête du rivet étant la partie opérationnelle maintenue sur ledit rivet par l'usager qui empoigne la clef de la partie de la poignée et la maintient sur place jusqu'à ce qu'il a terminé de visser le boulon ou vis dans le rivet bonne pour "soulever" la partie déformable (ou tige) dudit rivet.

3. Rivet et outil relatif pour le fixage du même selon les revendications précédentes, caractérisé en ce que les éléments d'engagement relatif entre la tête plane du rivet et la clef façonnée sont des éléments accouplabes au moyen d'un engagement relatif, accouplabes sans permettre la rotation relative d'un élément par rapport à l'autre.

FIG. 1

FIG. 2

FIG. 3

FIG. 4